# EUROPÄISCHE PATENTSCHRIFT

(11) **EP 1 256 158 B1**
(45) Veröffentlichungstag und Bekanntmachung des Hinweises auf die Patenterteilung: **09.05.2012**
(21) Anmeldenummer: 01953041.9
(22) Anmeldetag: 23.01.2001
(51) Int. Cl.: H02J 9/02

(54) **BELEUCHTUNGSSYSTEM**
LIGHTING SYSTEM
SYSTEME D'ECLAIRAGE

(30) Priorität: 14.02.2000 DE 10006408
(43) Veröffentlichungstag der Anmeldung: 13.11.2002
(73) Patentinhaber: Zumtobel Lighting GmbH, 6851 Dornbirn (AT)
(72) Erfinder: JOHLER, Günther, A-6900 Bregenz (AT); LUGER, Siegfried, A-6850 Dornbirn (AT); KLOCKER, Bernhard, A-6850 Dornbirn (AT)
(74) Vertreter: Schmidt-Evers, Jürgen
(86) Internationale Anmeldenummer: PCT/EP2001/000711
(87) Internationale Veröffentlichungsnummer: WO 2001/061823

(56) Entgegenhaltungen:
- EP-A- 0 490 329
- EP-A- 0 940 904
- DE-A- 19 611 161

## Beschreibung

Die vorliegende Erfindung betrifft ein Beleuchtungssystem nach dem Oberbegriff des Anspruchs 1, bei dem ein Notstrombetrieb vorgesehen ist.

Zur Beleuchtung von weitläufigen Räumlichkeiten oder Gebäuden werden oftmals Beleuchtungssysteme mit einer Vielzahl von dezentral installierten Leuchten verwendet. wobei die Leuchten von einem zentralen Steuergerät, das zumindest das Ein- und Ausschalten, möglicherweise auch das Dimmen der einzelnen Leuchten regelt, angesteuert werden. Aus Sicherheitsgründen ist bei derartigen Beleuchtungssystemen in der Regel auch ein Notstrom- bzw. Notlichtbetrieb vorgesehen, bei dem einige der Leuchten oder auch spezielle Notleuchten mit eventuell reduzierter Leistung betrieben werden.

Ein in der DE 27 47 173 A1 beschriebenes Beleuchtungssystem enthält beispielsweise autonome Notstromversorgungsgeräte, die eigene Notlichtlampen aufweisen. Die Notstromversorgungsgeräte enthalten eine Notstrombatterie sowie ein mit dem Netz verbundenes Ladegerät. Bei Netzausfall wird dann die Notstromleuchte über einen Schalter eingeschaltet. Ein weiteres Beleuchtungssystem mit einem Notstrombetrieb ist in der EP 0 490 329 B1 beschrieben. Hier sind Leuchtstofflampen über elektronische Vorschaltgeräte mit dem Netz verbunden. Kommt es zu einer Störung oder einem Ausfall der Netzversorgung, wird auf die Versorgungsleitungen für die Vorschaltgeräte eine Batterie-Gleichspannung in der Höhe der Netzspannung aufgeschaltet. Das Umschalten von der Wechselspannung des normalen Netzes auf die Gleichspannung wird von den Vorschaltgeräten automatisch erkannt. Diese erzeugen dann zwar weiterhin eine Wechselspannung für den Betrieb der Leuchtstofflampen, steuern die Lampen aber in einem vorgegebenen Notlichtmodus an, in dem beispielsweise nur einige bestimmte Lampen bei ca. 50% der maximalen Leuchtleistung betrieben werden.

Bei dem soeben beschriebenen Beleuchtungssystem der EP 0 490 329 B1 wird allen Leuchten die gleiche Versorgungsspannung zugeführt, wobei jedes Vorschaltgerät einzeln für sich prüft, b es sich dabei um die reguläre Netzspannung handelt oder nicht, und schließlich in den Notlichtmodus umschaltet, falls eine Netzstörung erkannt worden ist. Aus Gründen der Sicherheit wird ein Beleuchtungssystem allerdings oftmals so gestaltet, daß nur ein bestimmter Teil der Leuchten für die Notstrombeleuchtung vorgesehen ist, wobei diese Leuchten nicht an die allgemeine Stromversorgung, sondern an eine davon getrennte bzw. unabhängige Notstromversorgung angeschlossen sind. Bei dieser Notstromversorgung handelt es sich um eine weitere, vorzugsweise von der normalen Stromversorgung unabhängige Wechselspannungsversorgung, die bei einem Totalausfall des Netzes durch eine Gleichspannungsquelle ersetzt werden kann. In diesem Fall ist allerdings das in der EP 0 490 329 A1 beschriebene Verfahren nicht anwendbar, da nach den eben genannten Voraussetzungen die Notstromleuchten unabhängig von den regulären Leuchten mit Strom versorgt werden, so daß sie bzw. deren Vorschalt- oder Steuergeräte die reguläre Netzspannung für die normalen Leuchten gar nicht überwachen können. Eine Störung der Stromversorgung für die normalen Leuchten ist somit für die Notstromleuchten nicht ohne weiteres erkennbar. Um den Notstromleuchten dennoch einen Ausfall oder eine Störung der normalen Stromversorgung mitzuteilen, war es bisher üblich, das Netz für die normalen Leuchten des Beleuchtungssystems mit einer speziellen Überwachungsvorrichtung auf Störungen zu überprüfen und bei Feststellen eines Fehlers die Notstromversorgung kurzzeitig zu unterbrechen. Diese Unterbrechung wurde für eine bestimmte Zeit aufrecht erhalten, damit sie von den Steuergeräten der Notstromleuchten auch tatsächlich als Steuerbefehl zum Aktivieren des Notlichtbetriebs erkannt bzw. interpretiert wurde. Eine derartige vorübergehende Unterbrechung der Notstromversorgung ist allerdings nachteilig, da dazu ein nicht unbeachtlicher technischer Aufwand erforderlich ist. Falls es sich bei den Notstromleuchten um Gasentladungslampen handelt, ist ferner nicht auszuschließen, daß diese eventuell erst neu vorgeheizt bzw. neu gestartet werden müssen, wodurch ein Zeitverlußt bis zum Aktivieren der Notbeleuchtung in Kauf genommen werden muß.

Es ist daher Aufgabe der vorliegenden Erfindung, ein Beleuchtungssystem mit mindestens einer für einen Notstrombetrieb vorgesehen steuerbaren Notstromleuchte anzugeben, wobei einem Steuergerät dieser Leuchte bei Auftreten eines Störfalles in der regulären Stromversorgung ein entsprechender Steuerbefehl übermittelt wird, ohne dabei die Notstromversorgung zu beeinflussen. Ferner soll trotz eines möglichst geringen technischen Aufwands ein zuverlässiges Aktivieren des Notstrombetriebs gewährleistet werden.

Diese Aufgabe wird durch ein Beleuchtungssystem, welches die Merkmale des Anspruchs 1 aufweist, gelöst. Es zeichnet sich dadurch aus, daß sowohl den für den regulären Betrieb vorgesehenen Leuchten als auch den von einer separaten Stromversorgung gespeisten Notstromleuchten jeweils ein Steuergerät zugeordnet ist, wobei die Steuergeräte an einen gemeinsamen Bus angeschlossen sind und durch eine Überwachungsvorrichtung ein dem Zustand der regulären Stromversorgung entsprechendes Kontrollsignal auf den Bus abgegeben wird. Dieses Kontrollsignal wird von den Steuergeräten zum Erkennen eines Notfalls erfaßt und ausgewertet, wobei ein Ausbleiben bzw. ein nicht ordnungsgemäßer Empfang des Kontrollsignals als Notfall interpretiert wird. Der Ausfall des Kontrollsignals auf dem Bus ersetzt somit das bisher verwendete Verfahren mit einer vorübergehenden Unterbrechung der Stromversorgung für die Notstromleuchten. In einer besonders einfachen Ausführungsform kann dabei die Überwachungsvorrichtung einfach mit an die reguläre Stromversorgung angeschlossen werden, da in diesem Fall das vereinbarte Kontrollsignal zwangsläufig ausbleibt, wenn eine Störung auftritt. Auf diese Weise wird somit im Falle einer Störung ein zuverlässiges Aktivieren des Notstrombetriebs gewährleistet.

Weiterbildungen der Erfindung sind Gegenstand der Unteransprüche. So kann während des Normalbetriebs der Bus auch zum Übertragen von Steuerbefehlen genutzt werden, die von einem zentralen Steuersignal-Modul auf den Bus gegeben werden. In diesem Fall kann das Steuersignal-Modul auch gleichzeitig die Überwachungsfunktion wahrnehmen und das dem Netzzustand entsprechende Kontrollsignal abgeben. Dabei kann festgelegt werden, daß das Kontrollsignal entweder in zeitlich regelmäßigen Abständen oder permanent abgegeben wird. Im ersten Fall kann dann die Übertragung von Steuerbefehlen nur in bestimmten Zeiträumen erfolgen oder muß - wie im zweiten Fall - besonders gekennzeichnet sein. Diese Kennzeichnung kann beispielsweise in einem bestimmten Signalmuster oder darin bestehen, daß die Übertragung der Steuersignale einen bestimmten Zeitraum nicht überschreiten darf. Alternativ zu dem Steuersignal-Modul kann allerdings auch ein separates Überwachungsmodul vorgesehen sein, welches die Stromversorgung überwacht und das Kontrollsignal auf den Bus gibt.

Wurde von den Steuergeräten der Notstromleuchten eine Störung erkannt, steuern diese die Leuchten in einem bestimmen Notstrombetrieb an. Die Leuchten werden dabei entweder erst nach dem Erkennen der Störung eingeschaltet oder - falls sie dies schon waren - auf einen vorgegebenen Notbeleuchtungspegel eingestellt. Neben den Notstromleuchten können in dem Beleuchtungssystem ferner auch zusätzliche Warnsignalvorrichtungen vorgesehen sein, die ein Ausbleiben oder eine Unregelmäßigkeit des Kontrollsignals ebenfalls registrieren und dann optische oder akustische Warnsignale abgegeben. Schließlich kann auch das Übertragen einer Nachricht oder Meldung an eine zentrale Überwachungsstelle vorgesehen sein, so daß umgehend Wartungsarbeiten veranlaßt werden können.

Im folgenden soll die Erfindung anhand der beiliegenden Zeichnung näher erläutert werden. Es zeigen:
- Fig. 1: das Schema eines erfindungsgemäßen Beleuchtungssystems;
- Fig. 2a: ein Beispiel eines durch ein spezielles Signalmuster gekennzeichneten Steuersignals;
- Fig. 2b: ein weiteres Beispiel zur Kennzeichnung der Übertragung eines Steuersignals.

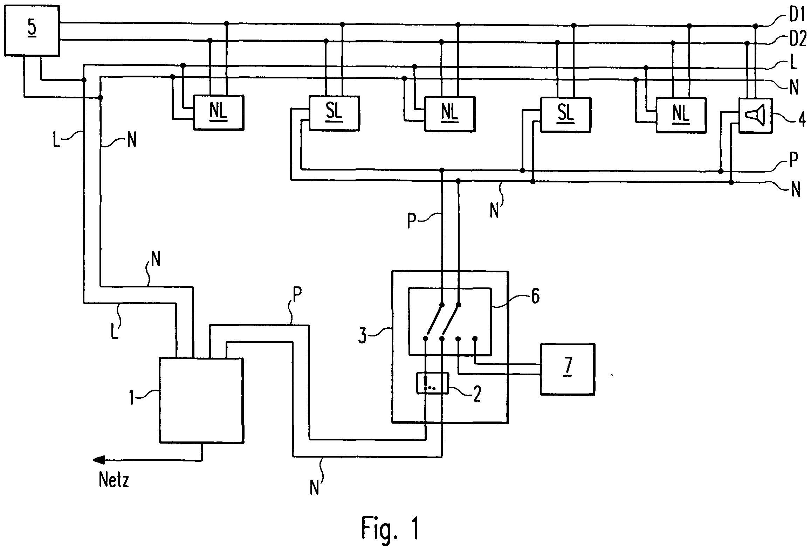

Das in Fig. 1 dargestellte Beleuchtungssystem enthält mehrere Netzleuchten NL. die für den Normalbetrieb vorgesehen sind, sowie mehrere Sicherheits- oder Notstromleuchten SL. Für die Netzleuchten NL und für die Notstromleuchten SL können dabei unterschiedliche Lampentypen vorgesehen sein. Insbesondere wäre es denkbar, daß für die Notstromleuchten SL im Energieverbrauch günstigere Leuchtstofflampen verwendet werden, während für die Netzleuchten NL ein anderer Lampentyp, mit dem möglicherweise eine ansprechendere Beleuchtung erzielt werden kann, gewählt wird. Grundsätzlich weisen jedoch alle Leuchten NL und SL jeweils ein (nicht dargestelltes) Steuergerät auf, mittels dem diese zumindest ein- und ausschaltbar, ggf. auch dimmbar sind. Dabei sind sämtliche Leuchten NL und SL mit ihren dazugehörigen Steuergeräten an die beiden Datenleitungen D1 und D2 eines gemeinsamen Busses angeschlossen, über den entsprechende Steuerbefehle an die verschiedenen Leuchten NL. SL übertragen werden, um ein zentrales Ansteuern der Leuchten NL, SL zu ermöglichen. Die Steuerbefehle werden von einem zentralen Steuersignal-Modul 5 in Form von seriellen digitalen Datenworten auf die beiden Datenleitungen D1, D2 gegeben.

Zur Stromversorgung des Beleuchtungssystems ist ein Hauptverteiler 1 für die allgemeine Stromversorgung vorgesehen, der eingangsseitig an das allgemeine Stromnetz angeschlossen ist. Ausgangsseitig gibt dieser Hauptverteiler 1 eine Phase L für die Netzstromversorgung der für den Normalbetrieb vorgesehenen Netzleuchten NL sowie eine Phase P für die Wechselspannungsversorgung der Notstromleuchten SL aus. Mit N ist der Neutralleiter bezeichnet, der parallel zu den Phasen L bzw. P überall durchgeführt ist.

Die Phase P für die Notstromleuchten SL führt zu dem Hauptverteiler 3 für die Sicherheitsstromversorgung. Allgemein wäre es zu Erhöhung der Sicherheit denkbar, daß von dem Hauptverteiler 1 für die allgemeine Stromversorgung nicht nur eine einzige Phase, sondern mehrere parallel geführte Phasen ausgegeben werden, wobei dann eine in dem Hauptverteiler 3 für die Sicherheitsstromversorgung angeordnete Phasenwahlschaltung 2 unter diesen mehreren Phasen immer diejenige auswählt, die auf jeden Fall noch Strom liefert. Ist beispielsweise eine erste Phase ausgefallen oder defekt, kann dann immer noch auf eine noch funktionsfähige zweite oder dritte Phase gewechselt werden. In gleicher Weise können natürlich auch mehrere Phasen zu einem zwischengeschalteten (nicht dargestellten) Unterverteiler für die allgemeine Stromversorgung führen.

An die beiden Ausgänge des Hauptverteilers 3 der Sicherheitsstromversorgung sind die Notstromleuchten SL angeschlossen. Sollte beispielsweise aufgrund eines Defekts des Hauptverteilers 1 für die allgemeine Stromversorgung oder in Folge eines totalen Netzausfalls die Phase P (oder alle der möglicherweise mehreren Phasen) keine Spannung mehr liefern, kann durch eine weitere in dem Hauptverteiler 3 für die Sicherheitsstromversorgung befindliche Auswahlschaltung 6 von der Netzversorgung auf eine Gleichspannungsversorgung umgeschaltet werden. Die Gleichspannungsquelle wird dabei durch eine wiederaufladbare Batterie 7 gebildet. Auf diese Weise wird sichergestellt, daß die Notstromleuchten SL und ihre Steuergeräte zu jeder Zeit mit Spannung versorgt werden und einsatzfähig sind.

An die allgemeine Stromversorgung ist neben den Netzleuchten NL auch das Steuersignal-Modul 5 angeschlossen. Mit den von dem Steuersignal-Modul 5 auf den Bus D1, D2 abgegebenen Steuersignalen können die verschiedenen Leuchten NL und SL jeweils einzeln aber auch gleichzeitig angesteuert werden. In der einfachsten Ausführungsform umfassen die digitalen Datenworte lediglich die Befehle EIN, AUS und evtl. NOT (zum aktiven Umschalten auf einen Notstrombetrieb). In aufwendigeren Beleuchtungssystemen ist es allerdings auch möglich, mit Hilfe der Steuerbefehle den Leuchtstärkepegel jeder einzelnen Leuchte einzustellen, wie die z.B. aus der EP 0 490 329 B 1 bekannt ist. Die Datenworte werden von den Steuergeräten in den Leuchten NL, SL erfaßt, ausgewertet und in entsprechende Steuersignale zum Betreiben der Lampen NL, SL umgesetzt.

Zusätzlich gibt das Steuersignal-Modul 5 in dem vorliegenden Beispiel auch ein dem Zustand der allgemeinen Stromversorgung entsprechendes Kontrollsignal auf den Bus. Insbesondere von den Steuergeräten der Notstromleuchten SL wird auch dieses Kontrollsignal erfaßt und ausgewertet. Werden dabei Unregelmäßigkeiten oder Fehler festgestellt, wird dies als Auftreten eines Stör- oder Notfalles aufgefaßt. Die Übertragung des Kontrollsignals wird beispielsweise unterbrochen, falls das Netz gestört ist - es z.B. unter den Pegel von 85 % der Normalleistung fällt - oder ganz ausfällt. Die Steuergeräte schalten dann aufgrund des Ausfalls dieses Signals selbständig in einen Notstrombetrieb um.

Da während der Übertragung von Steuerbefehlen das Kontrollsignal vorübergehend unterbrochen wird oder entfällt, muß dies allerdings besonders gekennzeichnet sein, um ein unbeabsichtigtes Aktivieren des Notstrombetriebs zu vermeiden. Einige Möglichkeiten hierfür werden später noch erläutert.

Für die Reaktionen der Notstromleuchten SL beim Auftreten eines Störfalles sind mehrere Möglichkeiten denkbar. Handelt es sich beispielsweise um reine Notleuchten, so werden diese während des Normalbetriebs des Beleuchtungssystems ausgeschaltet sein und sich erst nach dem Erkennen ein Störfalles einschalten. Andererseits könnte auch festgelegt werden, daß sich die Notstromleuchten SL während eines Normalzustands der Netzversorgung wie die üblichen Netzleuchten NL verhalten, also ebenfalls durch die Steuersignale über den Bus D1, D2 angesteuert werden und somit von den Netzleuchten NL zunächst gar nicht unterscheidbar sind. Erst bei einem Netzausfall oder einer Störung schalten die Steuergeräte in den speziellen Notstrombetrieb um und die Notstromleuchten SL werden auf einen bestimmten Notbeleuchtungspegel eingestellt. Handelt es sich dabei um Gasentladungslampen, so kann bei dem erfindungsgemäßen Beleuchtungssystem ein eventuelles Beheizen der Elektroden und Neustarten der Lampen entfallen.

Dabei ist es auch durchaus denkbar, daß sich die einzelnen Notstromleuchten SL unterschiedlich verhalten. Beispielsweise können einige von ihnen als reine Notleuchten ausgebildet sein und sich erst für den Notstrombetrieb einschalten, während andere schon zuvor eingeschaltet sind und lediglich auf einen festgelegten Notbeleuchtungspegel wechseln. Vorzugsweise werden allerdings alle Notstromleuchten SL während eines Notfalls in einem stromsparenden Modus betrieben, um die in der Batterie gespeicherte Energie bei einem totalen Netzausfall möglichst langsam zu verbrauchen und einen lang andauernden Notstrombetrieb zu ermöglichen.

In Fig. 1 ist zusätzlich ein akustischer Signalgeber 4 dargestellt, der wie die Sicherheitsleuchten SL an die Sicherheitsstromversorgung angeschlossen ist und ebenfalls eine Empfangseinheit zum Empfangen der auf den Datenleitungen D1, D2 übertragenen Signale aufweist. Dieser akustische Signalgeber 4 wertet das dem Netzzustand entsprechende Kontrollsignal ebenfalls aus und reagiert in geeigneter Weise darauf, gibt also z.B. beim Auftreten eines Notzustands einen Warnton oder dergleichen ab. Denkbar wäre auch das Anbringen von optischen Signalgebern wie z.B. von Blinklichtern. Schließlich könnte auch eine das Kontrollsignal auswertende Sendevorrichtung vorgesehen sein, die im Falle einer Störung an eine externe Überwachungszentrale einen Notruf bzw. eine Anforderung zum Einleiten von Wartungsarbeiten übermittelt.

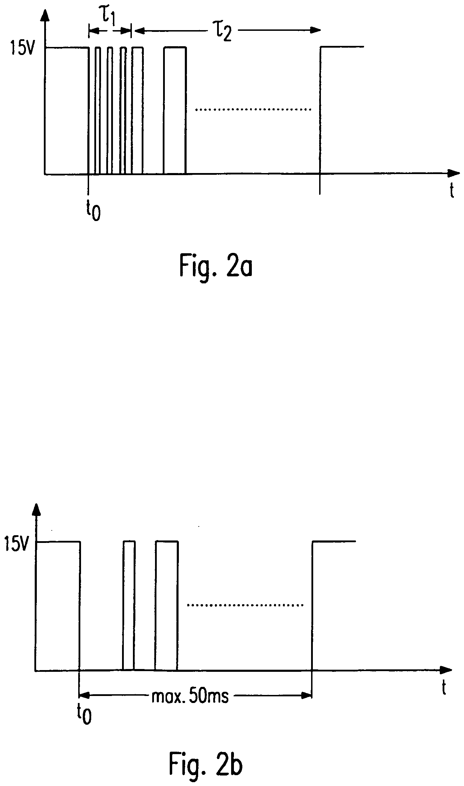

Werden die Busleitungen D1, D2 neben der Übermittlung des Kontrollsignals gleichzeitig auch zum Übertragen von Signalen zum Steuern der Leuchten NL, SL verwendet, muß - wie zuvor erwähnt wurde - sichergestellt werden, daß die vorübergehende Unterbrechung des Kontrollsignals nicht zu einem unbeabsichtigten Aktivieren des Notstrombetriebs führt. Eine bevorzugte und sehr einfache Lösung dieses Problems besteht darin, daß als Kontrollsignal von dem Steuersignal-Modul 5 ein konstantes Signal mit einem bestimmten Pegel auf den Bus abgegeben wird und daß der Pegel nur für die Übertragung von Steuersignalen bzw. von speziellen Datenworten vorübergehend abgesenkt wird. Dabei erfolgt dieses Absenken nach einem bestimmten Muster oder erfüllt bestimmte Bedingungen, die von den Steuergeräten der Notstromleuchten SL erkannt werden. Dies soll anhand der Fig. 2a und 2b näher erläutert werden.

Fig. 2a zeigt den zeitlichen Verlauf des von dem Steuersignal-Modul 5 abgegebenen Bussignals kurz vor bis kurz nach der Übertragung eines Steuerbefehls. In diesem ersten Beispiel wird der Steuerbefehl durch ein spezielles Signalmuster gekennzeichnet, als Zeichen eines ordnungsgemäßen Zustands der allgemeinen Stromversorgung wird von dem Steuersignal-Modul 5 ein konstantes 15V-Signal auf den Bus gegeben. Dieses konstante 15V-Signal stellt somit das Kontrollsignal dar. Nach dem Abfallen des Signals zum Zeitpunkt t₀ erfolgt während eines Zeitraums τ₁ die Übertragung des speziellen Signalmusters, das im dargestellten Fall aus drei aufeinanderfolgenden Pulsen in zeitlich festgelegten Abständen besteht. Durch dieses Muster wird sämtlichen Steuergeräten die Übertragung eines Steuerbefehls bzw. ein vorübergehendes Unterbrechen des 15V-Kontrollsignals angekündigt. Anschließend gibt das Steuersignal-Modul 5 während des Zeitraums τ₂ den eigentlichen Steuerbefehl auf den Bus, durch den beispielsweise ein neuer Dimmpegel eingestellt oder einige der Leuchten ein- oder ausgeschaltet werden. Nachdem die Übertragung beendet wurde, steigt der Pegel des Bussignals wieder auf konstant 15V und zeigt damit wieder den ordnungsgemäßen Zustand der allgemeinen Stromversorgung an. Denkbar wäre, durch ein weiteres Signalmuster auch das Ende der Übertragung zu kennzeichnen oder festzulegen, daß die Übertragung des Steuerbefehls nur einen bestimmten Zeitraum beanspruchen darf. Selbstverständlich können zur Kennzeichnung eines Steuerbefehls auch andere Signalmuster als die drei Pulse verwendet werden.

Eine weitere in Fig. 2b dargestellte Möglichkeit, ein unbeabsichtigtes Auslösen des Notstrombetriebs zu unterdrücken, besteht darin, kein spezielles Signalmuster zu verwenden, sondern festzulegen, daß das Abfallen des Bussignals unter einen vorgegebenen Pegel von z.B. 15V eine bestimmte Zeitspanne - beispielsweise 50ms - nicht überschreiten darf.

Alternativ zu diesen beiden Beispielen kann das Kontrollsignal nicht permanent sondern nur zu bestimmten Zeitpunkten und in regelmäßigen Abständen auf den Bus gegeben werden. Die verbleibende Zeit kann dann für die Übertragung von Steuersignalen genützt werden. In jedem Fall wird jedoch eine nicht ordnungsgemäße Funktion des Steuersignal-Moduls 5 und somit ein Ausbleiben des Kontrollsignals von den Steuergeräten der Notstromleuchten SL als Störfall aufgefaßt.

Der Anschluß des Steuersignal-Moduls 5 an die allgemeine Stromversorgung ist sogar als besonders vorteilhaft anzusehen, da im Falle eines Netzausfalls oder einer Störung das Kontrollsignal zwangsläufig nicht mehr gesendet werden kann und somit passiv ein Notfall-Identifikationssignal abgegeben wird. Dieses Verfahren gewährleistet somit trotz eines technisch geringen Aufwands eine sehr zuverlässige Aktivierung der Notbeleuchtung im Falle einer Störung. Eine aufwendige Schaltung, die den Zustand der allgemeinen Stromversorgung gesondert überwacht, kann damit entfallen. Dabei wird der Notbetrieb nicht nur bei einem Stromausfall, sondern auch bei einer Störung des Busses oder einem Defekt des Steuersignal-Moduls 5 aktiviert.

Abschließend sein noch erwähnt, daß nicht grundsätzlich das Steuersignal-Modul 5 für die Überwachung des Stromversorgung vorgesehen sein muß. Beispielsweise können in dem Beleuchtungssystem auch separate Überwachungsmodule angebracht werden, die diese Aufgabe übernehmen und selbständig das Kontrollsignal auf den Bus geben. In diesem Fall muß dann allerdings durch geeignete Synchronisationsmaßnahmen gewährleistet sein, daß nicht das separate Überwachungsmodul und das Steuersignal-Modul 5 gleichzeitig Signale auf den Bus geben bzw. die Übertragung des Kontrollsignals durch das Steuersignal-Modul 5 behindert wird. Dieses Problem kann in dem Fall, in dem das Steuersignal-Modul 5 beide Aufgaben erfüllt, erst gar nicht auftreten. Das Anbringen mehrerer verteilt angeordneter Überwachungsmodule eröffnet allerdings die Möglichkeit, jedem Überwachungsmodul sein eigenes Kontrollsignal zuzuordnen und dann bei einem teilweisen Ausfall der Stromversorgung auch nur in einem bestimmten Bereich die Notstromleuchten zu aktivieren.

## Patentansprüche

1. Beleuchtungssystem mit mindestens einer steuerbaren ersten Leuchte (NL), die an eine erste Stromversorgung (L, N) angeschlossen ist und mit mindestens einer steuerbaren Notstromleuchte (SL), die an eine weitere, von der ersten Stromversorgung (L. N) getrennte Notstromversorgung (P, N) angeschlossen ist, wobei jeder ersten Leuchte (NL) und jeder Notstromleuchte (SL) jeweils ein Steuergerät zugeordnet ist und alle Steuergeräte zum Empfangen von Steuersignalen an einen gemeinsamen Bus (D1, D2) angeschlossen sind,
und mit
einer Überwachungsvorrichtung (5), die so ausgebildet ist, dass sie ein dem Zustand der ersten Stromversorgung (L. N) entsprechendes Kontrollsignal erzeugt und auf den Bus (D1, D2) gibt, welches Kontrollsignal zumindest von dem mindestens einen Steuergerät für eine Notstromleuchte (SL) zum Erkennen eines Störfalls und zum Aktivieren eines Notstrombetriebs ausgewertet werden kann.

2. Beleuchtungssystem nach Anspruch 1,
**dadurch gekennzeichnet, dass** die Überwachungsvorrichtung so ausgebildet ist, dass
das Kontrollsignal kontinuierlich auf den Bus (D1, D2) gegeben wird.

3. Beleuchtungssystem nach Anspruch 1,
**dadurch gekennzeichnet, dass** die Überwachungsvorrichtung so ausgebildet ist, dass
das Kontrollsignal in zeitlich regelmäßigen Abständen abgegeben wird.

4. Beleuchtungssystem nach einem der Ansprüche 1 bis 3,
**dadurch gekennzeichnet,**
**daß** das Steuergerät der Notstromleuchte (SL) so ausgebildet ist, daß es bei einer Unterbrechung oder einem Ausfall des Kontrollsignals die Notstromleuchte (SL) in einem vorgegebenen Notstrombetrieb ansteuert.

5. Beleuchtungssystem nach einem der Ansprüche 1 bis 3,
**dadurch gekennzeichnet,**
**daß** das Beleuchtungssystem ein Steuersignal-Modul (5) aufweist, welches so ausgebildet ist, dass es auf den Bus (D1, D2) zusätzlich Steuersignale zur Steuerung und Regelung der Leuchten (NL, SL) abgibt,
wobei die Übertragung eines Steuersignals zu dessen Kennzeichnung nach einem festgelegten Schema erfolgt, das von den Steuergeräten der Leuchten (NL. SL) erkannt wird, und
wobei das Steuergerät der Notstromleuchte (SL) so ausgebildet ist, daß es bei einer Unterbrechung oder einem Ausfall des Kontrollsignals die Notstromleuchte (SL) in einem vorgegebenen Notstrombetrieb ansteuert, falls nicht gerade die Übertragung eines Steuerbefehls erfolgt.

6. Beleuchtungssystem nach Anspruch 5,
**dadurch gekennzeichnet, dass** das Steuersignalmodul so ausgebildet ist, dass
zur Kennzeichnung der Übertragung eines Steuerbefehls vor diesem ein spezielles Signalmuster von dem Steuersignal-Modul (5) auf den Bus (D1, D2) gegeben wird.

7. Beleuchtungssystem nach Anspruch 5,
**dadurch gekennzeichnet,**
**daß** zur Kennzeichnung der Übertragung eines Steuerbefehls die dafür benötigte Zeit einen bestimmten Zeitraum nicht überschreiten darf.

8. Beleuchtungssystem nach einem der Ansprüche 5 bis 7,
**dadurch gekennzeichnet,**
**daß** das Steuersignal-Modul (5) so ausgebildet ist, dass es gleichzeitig das Kontrollsignal auf den Bus (D1, D2) gibt.

9. Beleuchtungssystem nach einem der Ansprüche 5 bis 7,
**dadurch gekennzeichnet,**
**daß** die erste Stromversorgung von einem von dem Steuersignal-Modul (5) getrennten Überwachungsmodul überwacht wird und dieses Überwachungsmodul so ausgebildet ist, dass es das Kontrollsignal auf den Bus gibt.

10. Beleuchtungssystem nach einem der vorherigen Ansprüche,
**dadurch gekennzeichnet,**
**daß** die Notstromversorgung (P, N) eine von der ersten Stromversorgung (L. N) getrennte Wechselspannungsversorgung ist.

11. Beleuchtungssystem nach Anspruch 10,
**dadurch gekennzeichnet,**
**daß** die Notstromversorgung (P, N) eine zu der Wechselspannungsversorgung zusätzliche Gleichspannungsversorgung aufweist.

12. Beleuchtungssystem nach einem der vorherigen Ansprüche,
**dadurch gekennzeichnet,**
**daß** die Notstromleuchte (SL) während eines Normalbetriebs ausgeschaltet ist und nach dem Erkennen einer Störung der ersten Stromversorgung in dem Notstrombetrieb durch das Steuergerät eingeschaltet wird.

13. Beleuchtungssystem nach einem der Ansprüche 5 bis 11,
**dadurch gekennzeichnet,**
**daß** die Notstromleuchte (SL) während eines Normalbetriebs entsprechend den von dem Steuersignal-Modul (5) auf den Bus (D1, D2) gegebenen Steuersignalen angesteuert wird und nach dem Erkennen einer Störung der ersten Stromversorgung in dem Notstrombetrieb durch das Steuergerät auf einen vorgegebenen Beleuchtungspegel eingestellt wird.

14. Beleuchtungssystem nach einem der vorherigen Ansprüche,
**dadurch gekennzeichnet,**
**daß** das Beleuchtungssystem ferner an den Bus (D1, D2) angeschlossene Warnsignalvorrichtungen (4) enthält, die so ausgebildet sind, dass sie das Kontrollsignal ebenfalls auswerten und beim Erkennen einer Störung der ersten Stromversorgung (L, N) ein optisches oder ein akustisches Warnsignal abgeben.

15. Beleuchtungssystem nach einem der vorherigen Ansprüche,
**dadurch gekennzeichnet,**
**daß** das Beleuchtungssystem eine an den Bus (D1, D2) angeschlossenen Sendevorrichtung enthält, die so ausgebildet ist, dass sie das Kontrollsignal ebenfalls auswertet und beim Erkennen einer Störung der ersten Stromversorgung (L, N) ein Notrufsignal an eine externe Überwachungszentrale übermittelt.

## Claims

1. Lighting system with at least one controllable first luminaire (NL), which is connected to a first power supply (L, N), and with at least one controllable emergency power luminaire (SL), which is connected to a further emergency power supply (P, N) which is separate from the first power supply (L, N), a controller being associated with each first luminaire (NL) and each emergency power luminaire (SL), and all controllers being connected to a common bus (D1, D2) to receive control signals,
and with
a monitoring device (5), which is designed so that it generates a monitoring signal corresponding to the state of the first power supply (L, N) and puts it onto the bus (D1, D2), the at least one controller for an emergency power luminaire (SL) being at least able to evaluate this monitoring signal, in order to detect an incident and to activate emergency power operation.

2. Lighting system according to Claim 1,
**characterized in that**
the monitoring device is designed so that the monitoring signal is put continuously onto the bus (D1, D2) .

3. Lighting system according to Claim 1,
**characterized in that**
the monitoring device is designed so that the monitoring signal is output at regular time intervals.

4. Lighting system according to any one of Claims 1 to 3,
**characterized in that**
the controller of the emergency power luminaire (SL) is designed so that in the case of an interruption or failure of the monitoring signal, it controls the emergency power luminaire (SL) in predetermined emergency power operation.

5. Lighting system according to any one of Claims 1 to 3,
**characterized in that**
the lighting system has a control signal module (5), which is designed so that it additionally outputs onto the bus (D1, D2) control signals to control and regulate the luminaires (NL, SL),
a control signal being transmitted according to a defined pattern which the controllers of the luminaires (NL, SL) recognise, in order to identify it, and
the controller of the emergency power luminaire (SL) being designed so that in the case of an interruption or failure of the monitoring signal, it controls the emergency power luminaire (SL) in predetermined emergency power operation, unless a control command is currently being transmitted.

6. Lighting system according to Claim 5,
**characterized in that**
the control signal module is designed so that, to identify the transmission of a control command, before it the control signal module (5) puts a special signal pattern onto the bus (D1, D2).

7. Lighting system according to Claim 5,
**characterized in that**
to identify the transmission of a control command, the time required for this purpose must not exceed a specified time period.

8. Lighting system according to any one of Claims 5 to 7,
**characterized in that**
the control signal module (5) is designed so that it simultaneously puts the monitoring signal onto the bus (D1, D2) .

9. Lighting system according to any one of Claims 5 to 7,
**characterized in that**
the first power supply is monitored by a monitoring module which is separate from the control signal module (5), and this monitoring module is designed so that it puts the monitoring signal onto the bus.

10. Lighting system according to any one of the previous claims,
**characterized in that**
the emergency power supply (P, N) is an alternating voltage supply and is separate from the first power supply (L, N).

11. Lighting system according to Claim 10,
**characterized in that**
the emergency power supply (P, N) has a direct voltage supply in addition to the alternating voltage supply.

12. Lighting system according to any one of the previous claims,
**characterized in that**
the emergency power luminaire (SL) is switched off during normal operation, and after a fault of the first power supply is detected is switched on by the controller in emergency power operation.

13. Lighting system according to any one of Claims 5 to 11,
**characterized in that**
the emergency power luminaire (SL) during normal operation is controlled corresponding to the control signals which the control signal module (5) puts onto the bus (D1, D2), and after a fault of the first power supply is detected is set by the controller to a predetermined lighting level in emergency power operation.

14. Lighting system according any one of the previous claims,
**characterized in that**
the lighting system also includes warning signal devices (4) which are connected to the bus (D1, D2), and which are designed also so that they evaluate the monitoring signal and output an optical or acoustic warning signal if a fault of the first power supply (L, N) is detected.

15. Lighting system according to any one of the previous claims,
**characterized in that**
the lighting system includes a transmitting device which is connected to the bus (D1, D2), and which is designed so that it also evaluates the monitoring signal and transmits an emergency signal to an external monitoring centre if a fault of the first power supply (L, N) is detected.

## Revendications

1. Système d'éclairage comprenant au moins une première lampe commandable (NL) qui est reliée à une première alimentation électrique (L, N) et au moins une lampe de secours commandable (SL) qui est reliée à une autre alimentation électrique de secours (P, N) distincte de la première alimentation électrique (L, N), chaque première lampe (NL) et chaque lampe de secours (SL) étant associée à un appareil de commande respectif et tous les appareils de commande étant reliés à un bus commun (D1, D2) pour recevoir des signaux de commande,
et
comprenant un dispositif de surveillance (5) configuré de manière à générer un signal de contrôle correspondant à l'état de la première alimentation électrique (L, N) et à le transmettre sur le bus (D1, D2), lequel signal de contrôle peut être exploité par au moins le ou les appareils de commande de lampe de secours (SL) pour détecter une anomalie et activer un fonctionnement de secours.

2. Système d'éclairage selon la revendication 1,
**caractérisé en ce**
**que** le dispositif de surveillance est configuré de manière à transmettre le signal de contrôle en continu sur le bus (D1, D2).

3. Système d'éclairage selon la revendication 1,
**caractérisé en ce**
**que** le dispositif de surveillance est configuré de manière à transmettre le signal de contrôle à intervalles réguliers dans le temps.

4. Système d'éclairage selon l'une quelconque des revendications 1 à 3,
**caractérisé en ce**
**que** l'appareil de commande de la lampe de secours (SL) est configuré de manière à contrôler la lampe de secours (SL) dans un mode de fonctionnement de secours en cas d'interruption ou de défaillance du signal de contrôle.

5. Système d'éclairage selon l'une quelconque des revendications 1 à 3,
**caractérisé en ce**
**que** le système d'éclairage présente un module de signal de commande (5), lequel est configuré de manière à transmettre en plus sur le bus (D1, D2) des signaux de commande pour la commande et le réglage des lampes (NL, SL),
la transmission d'un signal de commande en vue de sa caractérisation se faisant suivant un schéma défini qui est reconnu par les appareils de commande des lampes (NL, SL) et
l'appareil de commande de la lampe de secours (SL) étant configuré de manière à contrôler la lampe de secours (SL), en cas d'interruption ou de défaillance du signal de contrôle, dans un mode de fonctionnement de secours prédéfini lorsqu'il n'est précisément pas transmis d'instruction de commande.

6. Système d'éclairage selon la revendication 5,
**caractérisé en ce**
**que** le module de signal de commande est configuré pour la caractérisation d'une instruction de commande, de manière à transmettre avant celle-ci une trame de signaux spéciale depuis le module de signal de commande (5) sur le bus (D1, D2).

7. Système d'éclairage selon la revendication 5,
**caractérisé en ce**
**que** le temps nécessaire à la caractérisation de la transmission d'une instruction de commande ne doit pas dépasser une durée déterminée.

8. Système d'éclairage selon l'une quelconque des revendications 5 à 7,
**caractérisé en ce**
**que** le module de signal de commande (5) est configuré de manière à transmettre en même temps le signal de contrôle sur le bus (D1, D2).

9. Système d'éclairage selon l'une quelconque des revendications 5 à 7,
**caractérisé en ce**
**que** la première alimentation électrique est surveillée par un module de surveillance distinct du module de signal de commande (5) et en ce que ce module de surveillance est configuré de manière à transmettre le signal de contrôle sur le bus.

10. Système d'éclairage selon l'une quelconque des revendications précédentes,
**caractérisé en ce**
**que** l'alimentation électrique de secours (P, N) est une alimentation en tension alternative distincte de la première alimentation électrique (L, N).

11. Système d'éclairage selon la revendication 10,
**caractérisé en ce**
**que** l'alimentation électrique de secours (P, N) présente une alimentation en tension continue en plus de l'alimentation en tension alternative.

12. Système d'éclairage selon l'une quelconque des revendications précédentes,
**caractérisé en ce**
**que** la lampe de secours (SL) est désactivée pendant un fonctionnement normal et activée en fonctionnement de secours par l'appareil de commande après la détection d'une anomalie de la première alimentation électrique.

13. Système d'éclairage selon l'une quelconque des revendications 5 à 11,
**caractérisé en ce**
**que** la lampe de secours (SL) est contrôlée pendant un fonctionnement normal en fonction des signaux de commande transmis par le module de signal de commande (5) sur le bus (D1, D2) et, après la détection d'une anomalie de la première alimentation électrique, réglée en fonctionnement de secours à un niveau d'éclairement prédéfini par l'appareil de commande.

14. Système d'éclairage selon l'une quelconque des revendications précédentes,
**caractérisé en ce**
**que** le système d'éclairage contient en outre des dispositifs de signalisation d'avertissement (4) reliés au bus (D1, D2) et configurés de manière à exploiter également le signal de contrôle et, si une anomalie de la première alimentation électrique (L, N) est détectée, à émettre un signal d'avertissement optique ou acoustique.

15. Système d'éclairage selon l'une quelconque des revendications précédentes,
**caractérisé en ce**
**que** le système d'éclairage contient un dispositif émetteur relié au bus (D1, D2) et configuré de manière à exploiter également le signal de contrôle et, si une anomalie de la première alimentation électrique (L, N) est détectée, à transmettre un signal d'appel d'urgence à un centre de surveillance extérieur.
